# EUROPEAN PATENT APPLICATION

(11) **EP 4 844 253 A1**
(43) Date of publication of application: **25.11.2026**
(21) Application number: 25221254.3
(22) Date of filing: 05.12.2025
(51) Int. Cl.: F16L 37/12, F16L 37/252, F16L 37/373

(54) **A REPLACEMENT CONNECTOR WITH BIDIRECTIONAL INTERLOCKING**

(30) Priority: 19.05.2025 CN 202510641398
(71) Applicant: Luxecasting Machinery Co., Ltd, Gao'an City, Yichun, Jiangxi 330800 (CN)
(72) Inventor: Huang, Gangfu, Jiangxi Province (CN); Zhang, Yucheng, Jiangxi Province (CN); Hu, Jianbao, Jiangxi Province (CN)
(74) Representative: Kayser, Christoph

(57) **Abstract**

A replacement connector with bidirectional interlocking is characterized in that it comprises:
a connector body, wherein the mating end of the connector body is provided with a plurality of protrusions and a plurality of grooves;
when two replacement connectors are mated together, the protrusions of the two replacement connectors are screwed into each other's grooves, thereby achieving mating and locking of the two replacement connectors;
a rotary valve, wherein the connector body is provided with a rotary valve, the handle of which is disposed outside the connector body, and the rotary valve is opened or closed by rotating the handle;
a movable latch, wherein the movable latch is rotatably disposed in a groove near the rotary valve, forming a lever structure; the rotary valve cooperates with the movable latch, and when the rotary valve is in the open state, the movable latch engages with the protrusion in the corresponding groove, restricting the circumferential rotational freedom of the protrusion; when the rotary valve is in the closed state, the movable latch releases its engagement with the protrusion.

## Description

### Technical Field

The present invention relates to the technical field of pipeline connection, and particularly to a replacement connector with bidirectional interlocking.

### Background Art

Quick-connect couplings achieve rapid pipe connection through rotational locking, but existing structures rely solely on locking friction resistance and lack a circumferential limiting mechanism.

When the pipe is subjected to vibration, pressure fluctuations, or unexpected torque, the coupling is prone to relative rotation, causing the locking to gradually loosen, resulting in low reliability and stability.

### Summary of the Invention

Therefore, the purpose of this invention is to provide a replacement coupling with bidirectional interlocking.

This invention provides the following technical solution: a replacement connector with bidirectional interlocking, comprising:
a connector body, wherein the mating end of the connector body is provided with multiple protrusions and multiple grooves;
when two replacement connectors are mated together, the protrusions of the two replacement connectors are screwed into each other's grooves, thereby achieving a mating and locking of the two replacement connectors;
a rotary valve, wherein the connector body is provided with a rotary valve, the handle of which is disposed outside the connector body, and the rotary valve is opened or closed by rotating the handle;
a movable latch, wherein the movable latch is rotatably disposed in a groove near the rotary valve, forming a lever structure; the rotary valve cooperates with the movable latch, and when the rotary valve is in the open state, the movable latch engages with the corresponding protrusion in the groove, restricting the circumferential rotational freedom of the protrusion; when the rotary valve is in the closed state, the movable latch releases its engagement with the protrusion.

Furthermore, one end of the movable latch forms a hook, and the other end is provided with a protruding pin. The middle part of the movable latch is rotatably connected to the connector body. A slide rail is provided on the handle of the rotary valve, the slide rail including an inclined rail and a straight rail. Initially, the protruding pin is located at the inclined rail. When the handle is rotated to open the rotary valve, the inclined rail presses against the protruding pin, causing the hook of the movable latch to engage with the protrusion.

Furthermore, the movable latch also includes a ramp, which presses against the protrusion. The slide rail also includes a stop rail, which communicates with the inclined rail and is vertical. Initially, the protruding pin is located at the stop rail. When the protrusion is screwed into the groove, the protrusion presses against the inclined rail, causing the protruding pin to move to the inclined rail. The replacement connector also includes a torsion spring provided between the movable latch and the connector body. Furthermore, the connector body includes a valve body, with a threaded interface at the tail end of the valve body for connection to a pipeline. The rotary valve and the movable latch are both located on the valve body, and the protrusion and groove are located on the side of the valve body away from the tail end.

Furthermore, a steel ball is provided between the tail end and the valve body, enabling the valve body to be rotatably connected to the tail end.

Furthermore, a fifth sealing ring and a second guide band are also provided between the tail end and the valve body.

Furthermore, the rotary valve includes a valve core rotatably disposed inside the connector body, with a handle fixedly connected to the valve core. Rotating the handle adjusts the state of the valve core, thus closing or opening the pipeline.

Furthermore, the handle and the valve core are fixedly connected via a valve stem. A first sealing ring is provided between the outer wall of the valve stem and the valve body. A first guide band is also provided between the outer wall of the valve stem and the valve body. The rotary valve also includes a fixing pin provided on the valve body. The valve core is rotatably connected to the fixing pin. A fourth sealing ring is provided between the fixing pin and the valve body.

Furthermore, a second sealing ring is provided at the mating end of the connector body. When two replacement connectors are mated, the second sealing rings of the two replacement connectors are pressed and fitted together.

Furthermore, a third sealing ring is provided on the valve body, and the third sealing ring is fitted to the surface of the valve core. The beneficial effects of this invention are as follows: When the two replacement connectors are mated and rotated to lock together, the protrusion of the opposing replacement connector rotates and pushes against the ramp, causing the ramp to rotate and move upwards. Simultaneously, the protruding pin also rotates upwards and moves to the inclined rail, while the locking hook rotates downwards. At this time, the locking hook does not interfere with the circumferential rotation trajectory of the protrusion of the opposing connector.

The two replacement connectors can also be loosened by circumferential rotation relative to each other. When the valve core is opened by rotating the handle, the driving protruding pin moves upwards through the inclined rail and screws into the straight rail. The locking hook engages with the opposing protrusion, restricting the circumferential rotation of the opposing replacement connector. The movable lock latch engages with the protrusion of the opposing replacement connector. This creates a circumferential engagement, effectively restricting the circumferential rotational freedom of the replacement connectors and preventing them from loosening. Furthermore, when the two replacement connectors are not mated, the handle cannot be driven because the protruding pin is blocked by the stop rail, and the valve core is in the closed state. When the two replacement connectors are mated and rotated to lock, the protrusions of the opposing connectors rotate and press against the ramp, causing the protruding pin to move from the stop rail to the ramp. At this point, the valve core can be opened by rotating the handle. Therefore, the valve core can only be opened after the two replacement connectors are mated, achieving a function to prevent misoperation.

To facilitate understanding of the present invention, a more comprehensive description of the invention will be given below with reference to the accompanying drawings.

### Figure Descriptions

Figure 1 is a schematic diagram of the three-dimensional structure of the present invention;
Figure 2 is a schematic diagram of the cross-sectional structure of the present invention;
Figure 3 is a schematic diagram of the three-dimensional structure of the lever limiting mechanism of the present invention;
Figure 4 is a schematic diagram of the handle structure of the present invention;
Figure 5 is a schematic diagram of the partial three-dimensional structure of the present invention before the two connectors are screwed together;
Figure 6 is a schematic diagram of the partial cross-sectional structure of the present invention before the two connectors are screwed together;
Figure 7 is a schematic diagram of the partial three-dimensional structure of the present invention with the two connectors screwed together when the handle is closed;
Figure 8 is a schematic diagram of the partial cross-sectional structure of the present invention with the two connectors screwed together when the handle is closed;
Figure 9 is a schematic diagram of the partial three-dimensional structure of the present invention with the two connectors screwed together when the handle is open;
Figure 10 is a schematic diagram of the partial cross-sectional structure of the present invention with the two connectors screwed together when the handle is open.
Figure 11 is a schematic diagram of the exploded structure of the present invention.
Figure 12 is a schematic diagram of the connection relationship between the groove and the movable latch of the present invention.

### Detailed Description

Several embodiments of the invention are shown in the drawings. However, the invention can be implemented in many different forms and is not limited to the embodiments described herein. Conversely, these embodiments are provided to make the disclosure of this invention more thorough and complete.

It should be noted that when an element is referred to as being "fixed to" another element, it can be directly on the other element or there may be an intervening element. When an element is referred to as being "connected to" another element, it can be directly connected to the other element or there may be an intervening element. The terms "vertical," "horizontal," "left," "right," and similar expressions used herein are for illustrative purposes only.

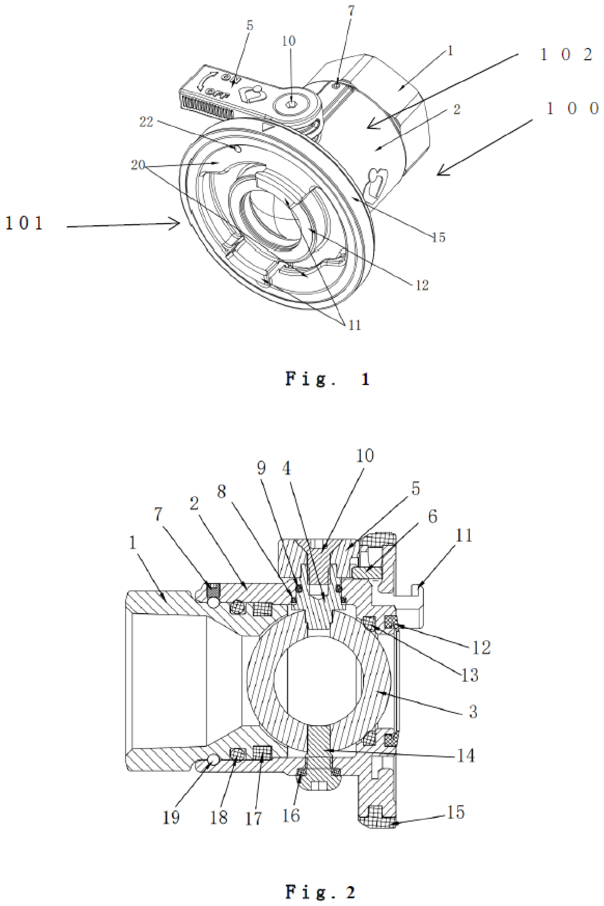

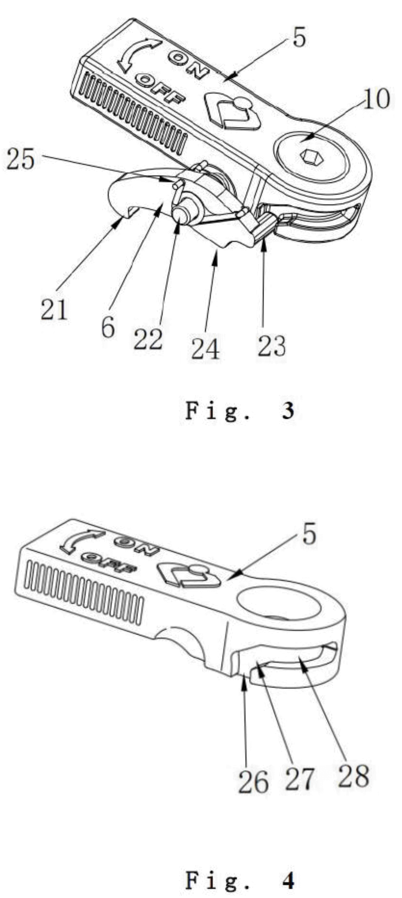

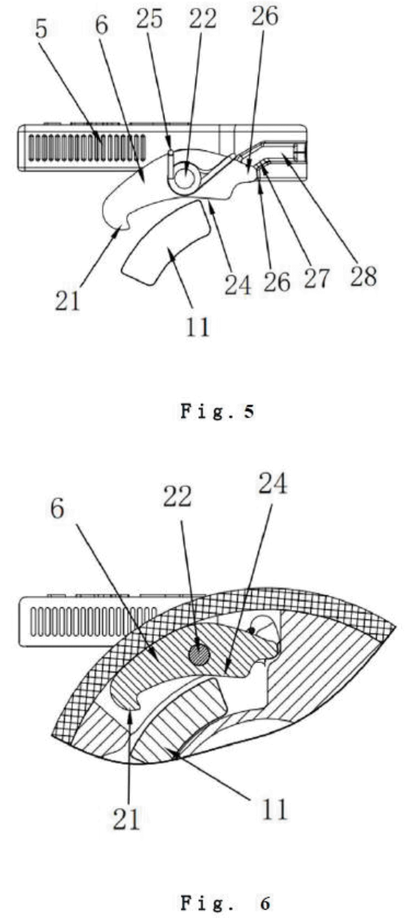

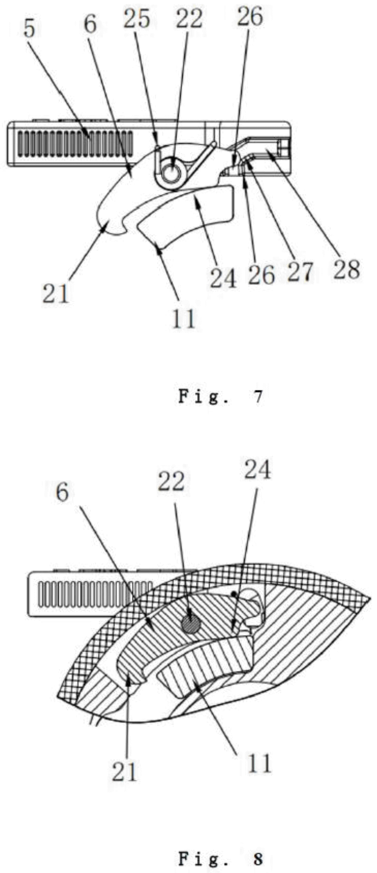

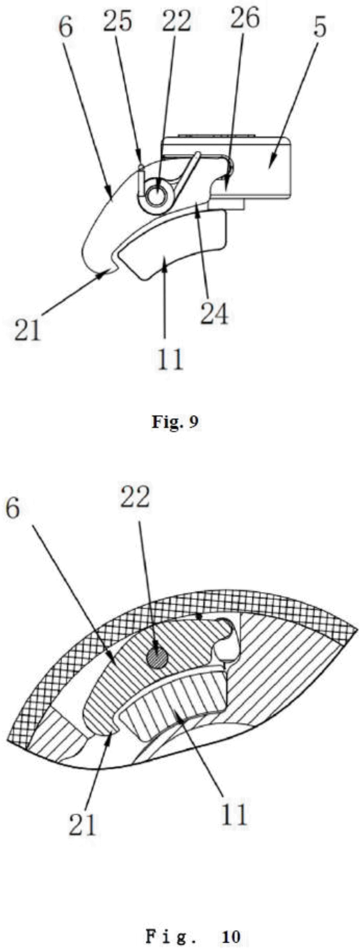

Unless otherwise defined, all technical and scientific terms used herein have the same meaning as commonly understood by one of ordinary skill in the art to which this invention pertains. The terminology used herein in the description of this invention is for the purpose of describing particular embodiments only and is not intended to be limiting of the invention. The term "and/or" as used herein includes any and all combinations of one or more of the associated listed items.
A replacement connector 100 with bidirectional interlocking, as shown in Figures 1-12, includes: a connector body 101, a rotary valve 102, and a movable latch 6;
The connector body 101 includes a tail section 1 and a valve body 2;

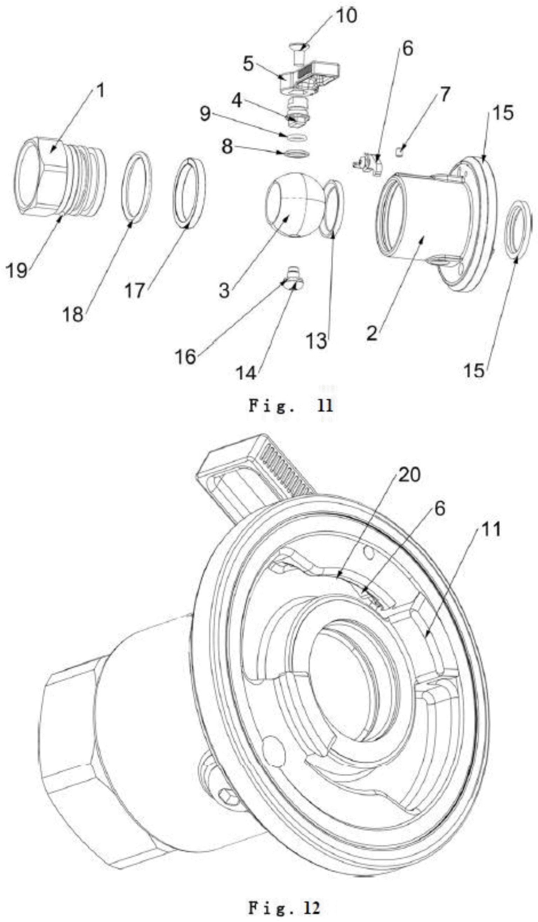

As shown in Figures 2 and 11, the tail section 1 is open at both ends and has a hollow internal structure. The end of the tail section 1 furthest from the valve body 2 is equipped with a standard pipe thread interface to accommodate pipes of different specifications. The other end of the tail section 1 is inserted into the valve body 2 and is rotatably connected to the valve body 2 via a steel ball 19 and a second guide band 17. Specifically, as shown in Figure 2, the outer wall of the tail section 1 has three annular receiving grooves from left to right. The first receiving groove accommodates the steel ball 19, the second receiving groove accomodates the fifth sealing ring 18 (which seals the tail section 1 with the valve body 2), and the third receiving groove accommodates the second guide band 17 (which reduces friction between the tail section 1 and the valve body 2). The rotational friction resistance between the steel ball 19, the fifth sealing ring 18, and the second guide band 17 are all located between the tail section 1 and the valve body 2.

As shown in Figures 2 and 11, the valve body 2 is also open at both ends, with a hollow internal structure. The left end connects to the tail 1, and the right end is used to connect to another replacement connector. A first valve body receiving groove is also provided at the corresponding position of the first receiving groove of the tail 1 on the left end of the valve body 2. The first valve body receiving groove and the first receiving groove of the tail 1 cooperate to accommodate the steel ball 19, thus achieving a rotatable connection. A hole is opened on the valve body 2, which communicates with the first valve body receiving groove. The steel ball 19 can be inserted into the first valve body receiving groove through the hole, and the hole is sealed with screw 7 to prevent the steel ball 19 from sliding out. Through holes are opened on both the upper and lower sides of the middle of the valve body 2, and both through holes communicate with the inner cavity of the valve body 2. The through holes are used to install a rotary valve. A second annular valve body receiving groove is provided in the inner cavity on the right side of the valve body 2. This groove is used to embed a third sealing ring 13, which fits against the surface of the valve core 3 of the rotary valve, thus achieving a rotational seal between the valve core 3 and the valve body 2. A second sealing ring 12 is provided on the right end mating face of the valve body 2. When two replacement connectors are mated, the two second sealing rings 12 fit together, achieving a radial seal for the replacement connectors.

As shown in Figure 12, two protrusions 11 and two grooves 20 are provided on the right end mating face of the valve body 2. The number of protrusions 11 and grooves 20 can be increased or decreased acording to actual conditions; no quantity limit is specified here.

When two replacement connectors are mated together, the protrusions 11 of the two replacement connectors screw into each other's grooves 20, thus achieving axial locking of the two replacement connectors.

One end of the movable latch 6 forms a hook 21, and the other end is provided with a protruding pin 23. The middle part of the movable latch 6 is rotatably connected to the connector body 101. A slide rail is provided on the handle (5) of the rotary valve 102. The slide rail includes a stop rail 26, an inclined rail 27 and a straight rail 28. Initially, the protruding pin 23 is located at the inclined rail 27. When the handle 5 is rotated to open the rotary valve 102, the inclined rail 7 presses against the protruding pin 23, causing the hook 21 of the movable latch 6 to engage with the protrusion 11.

The movable latch 6 further includes a ramp. The ramp engages with the protrusion. The stop rail 26 communicates with the inclined rail 27, and the inclined rail 27 is in general vertical, initially. The protruding pin 23 is located at the stop rail 16. When the protrusion 11 is screwed into the groove 20, the protrusion 11 presses against the inclined rail 27, causing the protruding pin 23 to move to the inclined rail 27. The replacement connector 100 further includes a torsion spring 25 provided between the movable latch 6 and the connector body 101.

The reference numbers in the attached drawings are as follows:
- 1: tail
- 2: valve body
- 3: valve core
- 4: valve stem
- 5: handle
- 6: movable latch
- 7: screw
- 8: first guide band
- 9: first sealing ring
- 10: first screw
- 11: protrusion
- 12: second sealing ring
- 13: third sealing ring
- 14: fixing pin
- 15: protective sleeve
- 16: fourth sealing ring
- 17: second guide band
- 18: fifth sealing ring
- 19: steel ball
- 20: groove
- 21: locking hook
- 22: second screw
- 23: protruding pin
- 24: slope
- 25: torsion spring
- 26: stop rail
- 27: sloping rail
- 28: straight rail
- 100: replacement connector
- 101: connector body

- 102: rotary valve

## Claims

1. A replacement connector (100) with bidirectional interlocking, **characterized in that** it comprises:
a connector body (101), wherein the mating end of the connector body (101) is provided with a plurality of protrusions (11) and a plurality of grooves (20);
when two replacement connectors (100) are mated together, the protrusions (11) of the two replacement connectors (100) are screwed into each other's grooves (20), thereby achieving mating and locking of the two replacement connectors (100);
a rotary valve (102), wherein the connector body (101) is provided with the rotary valve (102), a handle (5) of which is disposed outside the connector body (101), and the rotary valve (102) is opened or closed by rotating the handle (5);
a movable latch (6), wherein the movable latch (6) is rotatably disposed in a groove (20) near the rotary valve (102), forming a lever structure; the rotary valve (102) cooperates with the movable latch (6), and when the rotary valve (102) is in the open state, the movable latch (6) engages with a protrusion (11) in the corresponding groove (20), restricting the circumferential rotational freedom of the protrusion (11); when the rotary valve (102) is in the closed state, the movable latch (6) releases its engagement with the protrusion (11).

2. The replacement connector (100) according to claim 1, **characterized in that** one end of the movable latch (6) forms a hook (21), and the other end is provided with a protruding pin (23); the middle part of the movable latch (6) is rotatably connected to the connector body (101); a slide rail (26; 27; 28) is provided on the handle (5) of the rotary valve (102), the slide rail (26; 27; 28) including an inclined rail (27) and a straight rail (28); initially, the protruding pin (23) is located at the inclined rail (27); when the handle (5) is rotated to open the rotary valve (102), the inclined rail (7) presses against the protruding pin (23), causing the hook (21) of the movable latch (6) to engage with the protrusion (11).

3. The replacement connector (100) according to claim 2, **characterized in that** the movable latch (6) further includes a ramp, the ramp engaging with the protrusion; the slide rail (26; 27; 28) further includes a stop rail (26), the stop rail (26) communicating with the inclined rail (27), and the inclined rail (27) being vertical; initially, the protruding pin (23) is located at the stop rail (16); when the protrusion (11) is screwed into the groove (20), the protrusion (11) presses against the inclined rail (27), causing the protruding pin (23) to move to the inclined rail (27); the replacement connector (100) further includes a torsion spring (25) provided between the movable latch (6) and the connector body (101).

4. The replacement connector (100) according to claim 1, **characterized in that** the connector body (101) includes a valve body (2), and a threaded interface is provided at a tail end (1) of the valve body (2) for connection to a pipeline; the rotary valve (102) and the movable latch (6) are both disposed on the valve body (2), and the protrusion (11) and the groove (20) are disposed on the side of the valve body (2) away from the tail end (1).

5. The replacement connector (100) according to claim 4, **characterized in that** a steel ball (19) is disposed between the tail end (1) and the valve body (2), and the valve body (2) is rotatably connected to the tail end (1) through the steel ball (19).

6. The replacement connector (100) according to claim 5, **characterized in that** a fifth sealing ring (18) and a second guide band (17) are further disposed between the tail end (1) and the valve body (2).

7. The replacement connector (100) according to claim 1, **characterized in that** the rotary valve (102) includes a valve core (3) rotatably disposed inside the connector body (101), and the handle (5) is fixedly connected to the valve core (3); the state of the valve core (3) is adjusted by rotating the handle (5), thereby closing or opening the pipeline.

8. The replacement connector (100) according to claim 7, **characterized in that** the handle (5) and the valve core (3) are fixedly connected by a valve stem (4), a first sealing ring (9) is provided between an outer wall of the valve stem (4) and the valve body (2), a first guide band (8) is also provided between the outer wall of the valve stem (4) and the valve body (2), the rotary valve (102) further includes a fixing pin (14) provided on the valve body (2), the valve core (3) is rotatably connected to the fixing pin (14), and a fourth sealing ring (16) is provided between the fixing pin (14) and the valve body (2).

9. The replacement connector (100) according to claim 1, **characterized in that** a second sealing ring (12) is provided at the mating end of the connector body (101), and when two replacement connectors (100) are mated, the second sealing rings (12) of the two replacement connectors (100) are pressed and fitted together.

10. The replacement connector (100) according to claim 1, **characterized in that** a third sealing ring (13) is provided on the valve body (2), and the third sealing ring (13) is fitted to a surface of the valve core (3).
